(19) **Europäisches Patentamt / European Patent Office / Office européen des brevets**

(11) **EP 2 662 995 A1**

(12) # EUROPEAN PATENT APPLICATION
published in accordance with Art. 153(4) EPC

(43) Date of publication:
**13.11.2013 Bulletin 2013/46**

(51) Int Cl.:
**H04B 10/17** (0000.00)

(21) Application number: **12763486.3**

(22) Date of filing: **22.02.2012**

(86) International application number:
**PCT/CN2012/071428**

(87) International publication number:
**WO 2012/130001 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2011 CN 201110077267**

(71) Applicant: **Huawei Technologies Co., Ltd.
Shenzhen, Guangdong 518129 (CN)**

(72) Inventors:
• **SHI, Lei
Shenzhen
Guangdong 518129 (CN)**

• **HAN, Jianrui
Shenzhen
Guangdong 518129 (CN)**
• **XU, Mingming
Shenzhen
Guangdong 518129 (CN)**
• **TAN, Lin
Shenzhen
Guangdong 518129 (CN)**

(74) Representative: **Thun, Clemens
Mitscherlich & Partner
Sonnenstraße 33
80331 München (DE)**

(54) **METHOD, DEVICE AND SYSTEM FOR OPTICAL POWER DEBUGGING**

(57)    The present invention provides a method for monitoring and adjusting optical power, where the method includes: according to a characteristic of a service, calculating a degraded coefficient corresponding to each service; according to a nominal signal-to-noise ratio input and a nominal power input which are between nodes, calculating a nominal signal-to-noise ratio output between the nodes; according to the nominal signal-to-noise ratio input and the nominal signal-to-noise ratio output between the nodes, calculating a nominal degraded degree of an OSNR between the nodes; according to the degraded coefficient corresponding to each service, and the nominal degraded degree of the OSNR between the nodes, calculating a target degraded degree of each service between the nodes; according to the target degraded degree of each service between the nodes, calculating a target optical power adjusting value of each service at a sending end node; and sending the target power adjusting value of each service at the sending end node to an optical power adjusting unit which is at the sending end node, to adjust optical power of each service. The present invention further provides an apparatus and a system for monitoring and adjusting optical power. Transmission signal quality at a receiving end can be averaged by adopting the present invention.

FIG. 2

## Description

This application claims priority to Chinese Patent Application No. 201110077267.7, filed on March 29, 2011 and entitled "METHOD, APPARATUS, AND SYSTEM FOR MONITORING AND ADJUSTING OPTICAL POWER", which is incorporated herein by reference in its entirety.

## FIELD OF THE INVENTION

The present invention relates to the optical network field, and in particular, to a method, an apparatus, and a system for monitoring and adjusting optical power.

## BACKGROUND OF THE INVENTION

In recent years, with the development of network transmission technologies, a wavelength division network attracts extensive attention. The wavelength division network refers to an optical network which adopts a transmission principle of wavelength division multiplexing (WND). Wavelength division multiplexing transmission is a technology that two or more optical carrier signals of different wavelengths (carrying various information) are converged at a sending end through a multiplexer (also referred to as a wave combiner, Multiplexer), and are coupled to the same optical fiber of an optical line for transmission; at a receiving end, optical carriers of various wavelengths are separated through a demultiplexer (also referred to as a wave separator or a demultiplexer, Demultiplexer), and then are further processed by an optical receiver to restore original signals. This technology of simultaneously transmitting two or more optical signals of different wavelengths in the same optical fiber is referred to as wavelength division multiplexing.

Transmission signal quality obtained by the receiving end of the wavelength division network is restricted by monitoring and adjusting of optical power at the sending end. By adjusting the optical power at the sending end, the receiving end is enabled to achieve better service performance. A bit error rate (BER) value of each service is generally detected at the receiving end, and a smaller order of magnitude of a BER value of each service and a more consistent BER value of each service indicate that the receiving end obtains rather average transmission signal quality.

In the prior art, for services of different granularities and transmission distances transmitted in the same optical fiber, nominal degraded degrees of signal-to-noise ratios (OSNR) between same nodes are consistent, and therefore, after the optical power is adjusted at the sending end, target degraded degrees of the services between the same nodes are also consistent. However, the greater a transmission granularity and a transmission distance of a service are, the greater a BER value obtained at the receiving end is. In the prior art, for an apparatus for monitoring and adjusting optical power, that granularities and transmission distances of different services are different is not taken into consideration, and therefore, after the optical power is adjusted, the difference of the transmission signal quality obtained at the receiving end is relatively great.

## SUMMARY OF THE INVENTION

An embodiment of the present invention provides a method for monitoring and adjusting optical power, to average transmission signal quality at a receiving end.

The method for monitoring and adjusting optical power includes:

according to a characteristic of a service, calculating a degraded coefficient corresponding to each service;
according to a nominal signal-to-noise ratio input and a nominal power input which are between nodes, calculating a nominal signal-to-noise ratio output between the nodes;
according to the nominal signal-to-noise ratio input and the nominal signal-to-noise ratio output which are between the nodes, calculating a nominal degraded degree of an OSNR between the nodes;
according to the degraded coefficient corresponding to each service, and the nominal degraded degree of the OSNR between the nodes, calculating a target degraded degree of each service between the nodes; and according to the target degraded degree of each service between the nodes, calculating a target optical power adjusting value of each service at a sending end node; and
sending the target power adjusting value of each service at the sending end node to an optical power adjusting unit which is at the sending end node, to adjust optical power of each service.

An embodiment of the present invention provides an apparatus for monitoring and adjusting optical power, to average transmission signal quality at a receiving end.

The apparatus for monitoring and adjusting optical power includes:

a signal-to-noise ratio OSNR degraded coefficient calculating unit, configured to: according to a characteristic of a service, calculate a degraded coefficient corresponding to each service;

an impairment model calculating unit, configured to: according to a nominal signal-to-noise ratio input and a nominal power input which are between nodes, calculate a nominal signal-to-noise ratio output between the nodes;

a unit for calculating a nominal degraded degree of an OSNR between nodes, configured to: according to the nominal signal-to-noise ratio input between the nodes and the nominal signal-to-noise ratio output between the nodes, calculate the nominal degraded degree of the OSNR between the nodes;

an adjusting value calculating unit, configured to: according to the degraded coefficient corresponding to each service, and the nominal degraded degree of the OSNR between the nodes, calculate a target degraded degree of each service between the nodes; and according to the target degraded degree of each service between the nodes, calculate a target optical power adjusting value of each service at a sending end node; and

a sending unit, configured to send the target power adjusting value of each service at the sending end node to an optical power adjusting unit which is at the sending end node, to adjust optical power of each service.

An embodiment of the present invention provides a system for monitoring and  adjusting optical power, to average transmission signal quality at a receiving end.

The system for monitoring and adjusting optical power includes: an apparatus for monitoring and adjusting optical power and a sending end node which is connected to the apparatus for monitoring and adjusting optical power; the apparatus for monitoring and adjusting optical power, configured to: according to a characteristic of a service, calculate a degraded coefficient corresponding to each service; according to a nominal signal-to-noise ratio input and a nominal power input which are between nodes, calculate a nominal signal-to-noise ratio output between the nodes; according to the nominal signal-to-noise ratio input and the nominal signal-to-noise ratio output which are between the nodes, calculate a nominal degraded degree of an OSNR between the nodes; according to the degraded coefficient corresponding to each service, and the nominal degraded degree of the OSNR between the nodes, calculate a target degraded degree of each service between the nodes; and according to the target degraded degree of each service between the nodes, calculate a target optical power adjusting value of each service at the sending end node; and

the sending end node, configured to: according to the target optical power adjusting value calculated by the apparatus for monitoring and adjusting optical power, adjust optical power of a service at the sending end node.

A key of the embodiments of the present invention lies in that the OSNR degraded coefficient calculating unit is added to the apparatus for monitoring and adjusting optical power, that is to say, that different services have different characteristics is taken into consideration, for example, a granularity, a transmission distance, and quality of service (Qos), and when a granularity and a transmission distance of a service are taken into consideration, a relatively high degraded coefficient is obtained after a service with a short distance and a fine granularity is calculated by the OSNR degraded coefficient calculating unit, thereby adjusting a target degraded degree of the service to a higher value in the adjusting value calculating unit; a relatively small degraded coefficient is obtained after a service with a long distance and a coarse granularity is calculated by the OSNR degraded coefficient calculating unit, thereby adjusting a target degraded degree of the service to a lower value. In this way, according to a transmission principle of an optical signal, a degraded degree of the service with the short  distance and the fine granularity is adjusted to a relatively higher value, and a degraded degree of the service with the long distance and the coarse granularity is adjusted to a relatively lower value, thereby obtaining a relatively small BER value of each service at a receiving end, and BER values basically become consistent, which indicates that the receiving end obtains relatively average transmission signal quality of each service.

## BRIEF DESCRIPTION OF THE DRAWINGS

FIG. 1 is a schematic networking diagram of a wavelength division network in which three services of different granularities and different transmission distances are transmitted in a same optical fiber.

FIG. 2 is a schematic diagram of an apparatus for monitoring and adjusting optical power according to an embodiment of the present invention.

FIG. 3 is a schematic diagram showing that N optical amplifier nodes are included between a service node A and a service node B.

FIG. 4 is a schematic structural diagram of a system for monitoring and adjusting optical power according to an embodiment of the present invention.

## DETAILED DESCRIPTION OF THE EMBODIMENTS

To make the objectives, technical solutions, and advantages of the present invention more comprehensible, the following further describes the present invention in detail with reference to accompanying drawings and embodiments.

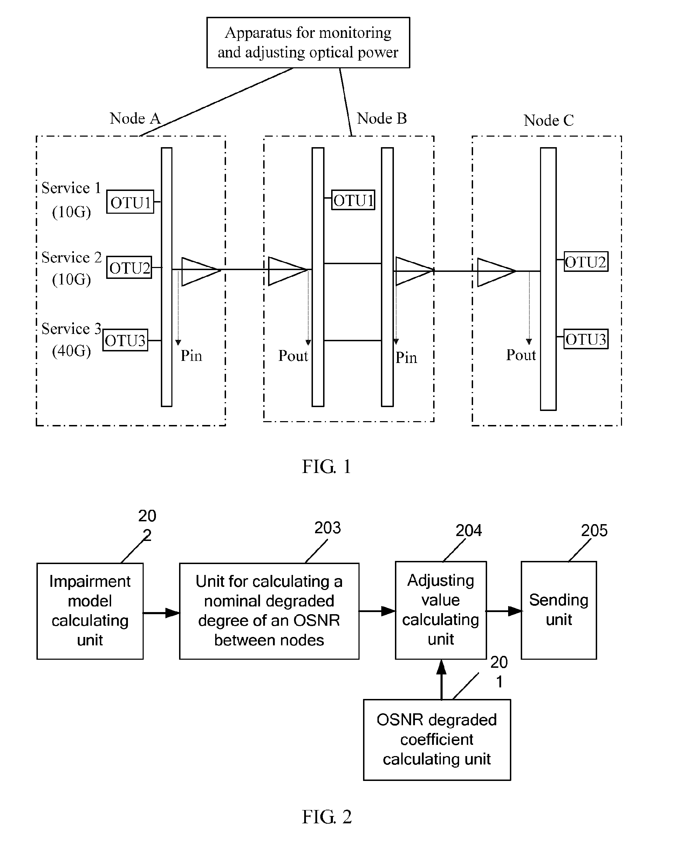

FIG. 1 is a schematic networking diagram of a wavelength division network in which three services of different granularities and different transmission distances are transmitted in a same optical fiber.

Granularities of a service 1 and a service 2 are 10 G (Gbits/s, gigabits per second), a granularity of a service 3 is 40 G, a transmission distance of the service 1 is relatively short and is from a node A to a node B, and transmission distances of the services 2 and 3 are relatively long and are from the node A to a node C. The three services represent three optical signals of different granularities and different transmission distances.

Monitoring and adjusting of optical power is generally segmented, that is to say, a link from the node A to the node B is first adjusted, and then a link from the node B to the node C is adjusted. An apparatus for monitoring and adjusting optical power according to an embodiment of the present invention is as shown in FIG. 2, and includes:

An OSNR degraded coefficient calculating unit 201 is configured to: according to a characteristic of a service, calculate a degraded coefficient corresponding to each service; where the characteristic of the service includes, but is not limited to, a granularity and a transmission distance, and quality of service Qos of the service. A granularity or transmission distance value of the service is in inverse proportion to the degraded coefficient value obtained through calculation by the OSNR degraded coefficient calculating unit; a value of a quality of service parameter of the service is in inverse proportion to the degraded coefficient value obtained through calculation by the OSNR degraded coefficient calculating unit.

An impairment model calculating unit 202 is configured to: according to a nominal signal-to-noise ratio input and a nominal power input which are between nodes which are obtained from a sending end node, calculate a nominal signal-to-noise ratio output between the nodes.

A unit 203 for calculating a nominal degraded degree of an OSNR between nodes is configured to: according to the nominal signal-to-noise ratio input between the nodes that is obtained from the sending end node, and the nominal signal-to-noise ratio output between the nodes that is obtained from the impairment model calculating unit, calculate the nominal degraded degree of the OSNR between the nodes.

Specifically, the nominal degraded degree of the OSNR between the nodes is calculated according to degraded

degree formula (2): $\text{OSNR degraded degree} = \dfrac{1}{\text{OSNRout}} - \dfrac{1}{\text{OSNRin}}$, where OSNRin and OSNRout are the nominal signal-to-noise ratio input and the nominal signal-to-noise ratio output between the nodes, respectively.

An adjusting value calculating unit 204 is configured to: according to the degraded coefficient corresponding to each service, and the nominal degraded degree of the OSNR between the nodes, calculate a target degraded degree of each service between the nodes; and according to the target degraded degree of each service between the nodes, calculate a target optical power adjusting value of each service at the sending end node.

In the prior art, a nominal degraded degree and target degraded degree of each service between nodes are the same, while in the embodiment of the present invention, a degraded coefficient is added, and according to formula (3): a target degraded degree of an i$^{th}$ service = a nominal degraded degree × a degraded coefficient, a target degraded degree of each service between nodes is calculated.

Then, a target signal-to-noise ratio output between nodes is obtained through calculation according to degraded

degree formula (2) $\text{OSNR degraded degree} = \dfrac{1}{\text{OSNRout}} - \dfrac{1}{\text{OSNRin}}$, where the OSNR degraded degree is a target degraded degree of each service between the nodes, and OSNRin is a nominal signal-to-noise ratio input between the nodes; a target optical power adjusting value Pin of each service at the sending end node is calculated according to formula (1): $\text{OSNRout} = -10\log\{10^{(\frac{\text{OSNRin}}{10})} + 10^{(\frac{\text{Pin-NF-10log(hvWt)}}{10})}\}$, where OSNRout is the target signal-to-noise ratio output between the nodes, OSNRin is the nominal signal-to-noise ratio input between the nodes, NF is a noise factor of an OA at the sending end node, h is the Planck constant, v is a frequency of light, and Wt is noise bandwidth.

A sending unit 205 is configured to send the target power adjusting value of each service at the sending end node to an optical power adjusting unit which is at the sending end node, to adjust optical power of each service.

The service is transmitted between the nodes, where between the nodes is between two neighboring service nodes, the former node of the two neighboring nodes is a sending end node, and a service node refers to a scenario where a service is added or dropped.

First the impairment model calculating unit is introduced. In a case that an optical power input and a signal-to-noise ratio input of a sending end service are input, the unit may obtain, through calculation, an optical power output and a signal-to-noise ratio output of a receiving end service. Establishment of a specific model needs plenty of information, and the more detailed the information is, the more accurate the model is, that is, the output obtained according to the input is closer to a true value. For the information, not only a dispersion slope, attenuation, a non-linear coefficient, an effective area and so on of an optical fiber need to be taken into consideration, but also a differential loss of a board, a noise factor of an optical amplifier, various signal-to-noise ratio costs in an optical fiber transmission process and so on need to be taken into consideration, and then modeling is performed according to a mutual influence relationship between wavelengths in the optical amplifier and a link signal-to-noise ratio value, so that the optical power output and the signal-to-noise ratio output of the receiving end service can be obtained through accurate calculation in the case that the optical power input and the signal-to-noise ratio input of the sending end service are input. Therefore, establishment of the impairment model calculating unit is also a process continuously perfected and corrected along with practice. Simply for example, it is assumed that, the impairment model calculating unit is obtained according to formula (1)

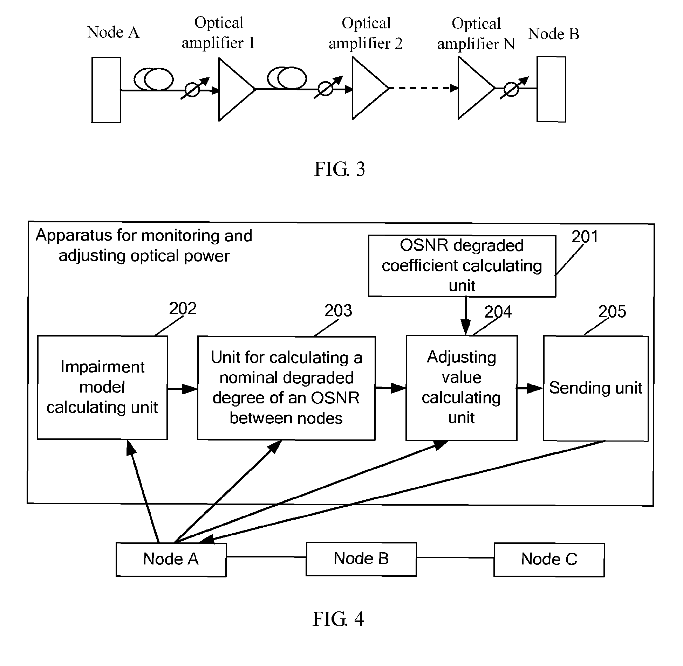

$$OSNRout = -10\log\{10^{(\frac{OSNRin}{10})} + 10^{(\frac{Pin\text{-}NF\text{-}10\log(hvWt)}{10})}\},$$ where NF, h, v, and Wt are known values, and according to the input nominal signal-to-noise ratio input (OSNRin) and the input nominal power input (Pin) that are between the nodes, a corresponding nominal signal-to-noise ratio output (OSNRout) between the nodes may be simply calculated. To clearly describe the impairment model calculating unit, FIG. 3 is a schematic diagram showing that N optical amplifier nodes are included between a service node A and a service node B. An optical amplifier node refers that there is only an optical amplifier on the node and no service is added or dropped on the node. Given that a nominal signal-to-noise ratio input and a nominal power input that are between service nodes A and B are known, for an segment from the service node A to an optical amplifier 1, according to a stimulated Raman scattering (SRS) model of an optical fiber in a link, the input optical power and OSNR of the optical amplifier 1 may be accurately calculated, and then by utilizing a model of the optical amplifier 1, the output optical power and OSNR of the optical amplifier 1 may be accurately calculated, where an impairment model includes an SRS model and an optical amplifier model which are on each span. Similarly, calculation is performed for each span by using an impairment model in sequence, until the nominal signal-to-noise ratio output between the nodes is obtained through calculation.

According to FIG. 1, the link from the node A to the node B is first adjusted. In this case, the node A is an initial sending end node. A signal has not passed through an optical amplifier OA and has not undergone optical attenuation yet, so noise does not appear. Thus, it is considered that a nominal signal-to-noise ratio input between A and B is infinite. A signal-to-noise ratio is a ratio of normal signal power to noise power in optical signal transmission. The nominal power input between A and B is a nominal value of the OA, and the value may be obtained by looking up an OA manual. A nominal signal-to-noise ratio output between A and B is obtained after calculation is performed on the nominal signal-to-noise ratio input and the nominal power input between A and B by the impairment model calculating unit 202. Then, nominal degraded degrees of the services obtained through calculation by the unit 203 for calculating a nominal degraded degree of an OSNR between nodes are the same.

When granularities and transmission distances of different services are taken into consideration, the OSNR degraded coefficient calculating unit 201 can obtain different degraded coefficients according to the granularities and transmission distances of the services. The granularity or transmission distance value of a service is in inverse proportion to the degraded coefficient value obtained through calculation by the OSNR degraded coefficient calculating unit, that is to say, a relatively high degraded coefficient is obtained after a service with a short distance and a fine granularity is calculated by the OSNR degraded coefficient calculating unit; a relatively small degraded coefficient is obtained after a service with a long distance and a coarse granularity is calculated by the OSNR degraded coefficient calculating unit. For example, for services 1, 2, and 3 in FIG. 1, it is obtained that a degraded coefficient of the service 1 is 110%, a degraded coefficient of the service 2 is 100%, and a degraded coefficient of the service 3 is 90%. After the service 1 with the highest degraded coefficient passes through the unit 203 for calculating a nominal degraded degree of an OSNR between nodes, and enters the adjusting value calculating unit 204, to obtain a highest target degraded degree, which means that after optical power of the node A is adjusted, the degraded degree of the service 1 is the greatest, and a purpose is to balance a BER value of each service. It can be seen that, compared with the prior art, when the adjusting value calculating unit 204 adjusts optical power of each service subsequently, it is required that a degraded degree between A and B is different.

Further, the link from the node B to the node C is adjusted, and in this case, the node B is a relay sending end node. Because the service 1 is from the node A to the node B, services that continue to be transmitted between B and C are the services 2 and 3. As long as a service does not pass through the OA, the signal-to-noise ratio does not change. Therefore, beginning from a second segment, a nominal signal-to-noise ratio input value of each subsequent segment is an output value of a nominal signal-to-noise ratio of a previous segment in a nominal case. A nominal signal-to-noise ratio input between B and C is a nominal signal-to-noise ratio output between A and B. A nominal power input between B and C is a nominal value of the OA, and the value may still be obtained by looking up the OA manual. A nominal signal-to-noise ratio output between B and C is obtained after calculation is performed on the nominal signal-to-noise ratio input and the nominal power input between B and C by the impairment model calculating unit 202. Then, nominal degraded degrees of the services obtained through calculation by the unit 203 for calculating a nominal degraded degree of an OSNR between nodes are the same. However, because degraded coefficients of the services 2 and 3 are different, when the adjusting value calculating unit 204 adjusts optical power of the services 2 and 3 subsequently, it is required that a degraded degree between B and C is also different.

It can be seen from the above that, by adjusting optical power by segments, target degraded degrees of services between the nodes become different. In the foregoing embodiment, the link from the node A to the node B is first adjusted, and then the link from the node B to the node C is adjusted, a target degraded degree of the service 1 at its receiving end node B, and target degraded degrees of the services 2 and 3 at their receiving end node C are different from each other, which is exactly a result of performing interference by using an OSNR degraded coefficient. In this way, after optical power adjustment, a relatively small BER value of each service may be obtained at a receiving end, and BER values basically become consistent, so that the receiving end can obtain relatively average transmission signal quality of each service.

Corresponding to the apparatus, an embodiment of the present invention further provides a method for monitoring and adjusting optical power, where the method includes:

according to a characteristic of a service, calculating a degraded coefficient corresponding to each service;
according to a nominal signal-to-noise ratio input and a nominal power input which are between nodes, calculating a nominal signal-to-noise ratio output between the nodes;
according to the nominal signal-to-noise ratio input and the nominal signal-to-noise ratio output which are between the nodes, calculating a nominal degraded degree of an OSNR between the nodes;
according to the degraded coefficient corresponding to each service, and the nominal degraded degree of the OSNR between the nodes, calculating a target degraded degree of each service between the nodes; and according to the target degraded degree of each service between the nodes, calculating a target optical power adjusting value of each service at a sending end node; and
sending a target power adjusting value of each service at the sending end node to an optical power adjusting unit which is at the sending end node, to adjust optical power of each service.

FIG. 2 shows that an apparatus for monitoring and adjusting optical power receives a signal of a sending end node, and calculates the target optical power at the sending end node. In FIG. 1, both a node A and a node B may be taken as a sending end node, and therefore, the apparatus for monitoring and adjusting optical power may receive a signal of the node A or a signal of the node B. Specifically, with reference to FIG. 1 and FIG. 2, an adjusting value calculating unit 204 receives the nominal signal-to-noise ratio input sent by the sending end node; an impairment model calculating unit 202 receives the nominal signal-to-noise ratio input and the nominal power input which are between nodes and are sent by the sending end node, a unit 203 for calculating a nominal degraded degree of an OSNR between nodes receives the nominal signal-to-noise ratio input between the nodes that is sent by the sending end node, and a sending unit 205 sends a target power adjusting value to the sending end node, to adjust optical power of each service. As shown in FIG. 4, FIG. 4 is a schematic structural diagram of a system for monitoring and adjusting optical power according to an embodiment of the present invention. In the embodiment, optical power adjustment between a node A and a node B is taken as an example to exemplarily illustrate signal interaction between the node A, which is taken as a sending end, and an apparatus for monitoring and adjusting optical power. It should be noted that, in the foregoing embodiment, a signal that is received by each unit of the apparatus for monitoring and adjusting optical power is not necessarily a signal at a sending end node, and each unit of the apparatus may also directly obtain a signal from other devices such as a network management system or an OA.

Therefore, an embodiment of the present invention further provides a system for monitoring and adjusting optical power, where the system includes: an apparatus for monitoring and adjusting optical power, and a sending end node which is connected to the apparatus for monitoring and adjusting optical power.

The apparatus for monitoring and adjusting optical power is configured to: according to a characteristic of a service, calculate a degraded coefficient corresponding to each service; according to a nominal signal-to-noise ratio input and a nominal power input which are between nodes, calculate a nominal signal-to-noise ratio output between the nodes; according to the nominal signal-to-noise ratio input and the nominal signal-to-noise ratio output which are between the nodes, calculate a nominal degraded degree of an OSNR between the nodes; according to the degraded coefficient corresponding to each service, and the nominal degraded degree of the OSNR between the nodes, calculate a target degraded degree of each service between the nodes; and according to the target degraded degree of each service between the nodes, calculate a target optical power adjusting value of each service at the sending end node.

The sending end node is configured to: according to the target optical power adjusting value calculated by the apparatus for monitoring and adjusting optical power, adjust optical power of a service that is at the sending end node.

In addition, it should be noted that, calculation of a degraded coefficient corresponding to each service includes, but is not limited to, a granularity and a transmission distance of the service, and may further be based on a protection level and an attribute of the service. Various embodiments in which a degraded degree of each service can be adjusted by using a degraded coefficient all fall within the protection scope of the present invention.

The foregoing description is merely about exemplary embodiments of the present invention, but is not intended to limit the present invention. Any modification, equivalent replacement, or improvement made within the idea and principle of the present invention shall fall within the protection scope of the present invention.

## Claims

1. A method for monitoring and adjusting optical power, comprising:

   according to a characteristic of a service, calculating a degraded coefficient corresponding to each service;
   according to a nominal signal-to-noise ratio input and a nominal power input which are between nodes, calculating a nominal signal-to-noise ratio output between the nodes;
   according to the nominal signal-to-noise ratio input and the nominal signal-to-noise ratio output which are between the nodes, calculating a nominal degraded degree of an OSNR between the nodes;
   according to the degraded coefficient corresponding to each service, and the nominal degraded degree of the OSNR between the nodes, calculating a target degraded degree of each service between the nodes; and
   according to the target degraded degree of each service between the nodes, calculating a target optical power adjusting value of each service at a sending end node; and
   sending the target power adjusting value of each service at the sending end node to an optical power adjusting unit which is at the sending end node, to adjust optical power of each service.

2. The method according to claim 1, wherein the target degraded degree of each service between the nodes is calculated according to formula (3): a target degraded degree of an $i^{th}$ service = a nominal degraded degree $\times$ a degraded coefficient.

3. The method according to claim 2, wherein the characteristic of the service is a granularity and a transmission distance of the service, and a granularity or transmission distance value of the service is in inverse proportion to a degraded coefficient value obtained through calculation by an OSNR degraded coefficient calculating unit.

4. The method according to claim 2, wherein the characteristic of the service is quality of service QoS of the service, and a value of a quality of service parameter of the service is in inverse proportion to a degraded coefficient value obtained through calculation by an OSNR degraded coefficient calculating unit.

5. An apparatus for monitoring and adjusting optical power, comprising:

   a signal-to-noise ratio OSNR degraded coefficient calculating unit, configured to: according to a characteristic of a service, calculate a degraded coefficient corresponding to each service;
   an impairment model calculating unit, configured to: according to a nominal signal-to-noise ratio input and a nominal power input which are between nodes, calculate a nominal signal-to-noise ratio output between the nodes;
   a unit for calculating a nominal degraded degree of an OSNR between nodes, configured to: according to the nominal signal-to-noise ratio input between the nodes and the nominal signal-to-noise ratio output between the nodes, calculate the nominal degraded degree of the OSNR between the nodes;
   an adjusting value calculating unit, configured to: according to the degraded coefficient corresponding to each service, and the nominal degraded degree of the OSNR between the nodes, calculate a target degraded degree of each service between the nodes; and according to the target degraded degree of each service between the nodes, calculate a target optical power adjusting value of each service at a sending end node; and
   a sending unit, configured to send the target power adjusting value of each service at the sending end node to an optical power adjusting unit which is at the sending end node, to adjust optical power of each service.

6. The apparatus according to claim 5, wherein the adjusting value calculating unit calculates the target degraded degree of each service between the nodes according to formula (3): a target degraded degree of an $i^{th}$ service = a nominal degraded degree $\times$ a degraded coefficient.

7. The apparatus according to claim 6, wherein the characteristic of the service is a granularity and a transmission distance of the service.

8. The apparatus according to claim 6, wherein the characteristic of the service is quality of service QoS of the service.

9. A system for monitoring and adjusting optical power, comprising: an apparatus for monitoring and adjusting optical power and a sending end node which is connected to the apparatus for monitoring and adjusting optical power, wherein

   the apparatus for monitoring and adjusting optical power is configured to: according to a characteristic of a service, calculate a degraded coefficient corresponding to each service; according to a nominal signal-to-noise ratio input and a nominal power input which are between nodes, calculate a nominal signal-to-noise ratio output between the nodes; according to the nominal signal-to-noise ratio input and the nominal signal-to-noise ratio output which are between the nodes, calculate a nominal degraded degree of an OSNR between the nodes; according to the degraded coefficient corresponding to each service, and the nominal degraded degree of the OSNR between the nodes, calculate a target degraded degree of each service between the nodes; and according to the target degraded degree of each service between the nodes, calculate a target optical power adjusting value of each service at the sending end node; and

   the sending end node is configured to: according to the target optical power adjusting value calculated by the apparatus for monitoring and adjusting optical power, adjust optical power of a service that is at the sending end node.

10. The system according to claim 9, wherein the apparatus for monitoring and adjusting optical power comprises:

    an OSNR degraded coefficient calculating unit, configured to: according to the characteristic of the service, calculate the degraded coefficient corresponding to each service;

    an impairment model calculating unit, configured to: according to the nominal signal-to-noise ratio input and the nominal power input which are between nodes, calculate the nominal signal-to-noise ratio output between the nodes;

    a unit for calculating a nominal degraded degree of an OSNR between nodes, configured to: according to the nominal signal-to-noise ratio input between the nodes and the nominal signal-to-noise ratio output between the nodes, calculate the nominal degraded degree of the OSNR between the nodes;

    an adjusting value calculating unit, configured to: according to the degraded coefficient corresponding to each service, and the nominal degraded degree of the OSNR between the nodes, calculate the target degraded degree of each service between the nodes; and according to the target degraded degree of each service between the nodes, calculate the target optical power adjusting value of each service at the sending end node; and

    a sending unit, configured to send the target power adjusting value of each service at the sending end node to an optical power adjusting unit which is at the sending end node, to adjust optical power of each service.

11. The system according to claim 10, wherein the characteristic of the service is a granularity and a transmission distance of the service.

12. The system according to claim 10, wherein the characteristic of the service is quality of service QoS of the service.

Apparatus for monitoring
and adjusting optical power

Node A | Node B | Node C

Service 1
(10G) OTU1

OTU1

Service 2
(10G) OTU2

OTU2

Service 3
(40G) OTU3

OTU3

Pin | Pout | Pin | Pout

FIG. 1

202

Impairment
model
calculating
unit

203

Unit for calculating a
nominal degraded
degree of an OSNR
between nodes

204

Adjusting
value
calculating
unit

205

Sending
unit

201

OSNR degraded
coefficient
calculating unit

FIG. 2

Node A   Optical          Optical          Optical
         amplifier 1      amplifier 2      amplifier N   Node B

FIG. 3

Apparatus for monitoring and
adjusting optical power

OSNR degraded
coefficient calculating
unit                                201

202              203              204              205

Impairment      Unit for calculating a   Adjusting
model           nominal degraded         value            Sending unit
calculating unit  degree of an OSNR      calculating
                 between nodes           unit

Node A          Node B          Node C

FIG. 4

<table>
<tr><td colspan="2"><b>INTERNATIONAL SEARCH REPORT</b></td><td>International application No.<br><b>PCT/CN2012/071428</b></td></tr>
</table>

**A. CLASSIFICATION OF SUBJECT MATTER**

H04B10/17 (2006.01) i

According to International Patent Classification (IPC) or to both national classification and IPC

**B. FIELDS SEARCHED**

Minimum documentation searched (classification system followed by classification symbols)

IPC: H04B10/-

Documentation searched other than minimum documentation to the extent that such documents are included in the fields searched

Electronic data base consulted during the international search (name of data base and, where practicable, search terms used)

CNABS, CNTXT, CNKI, VEN: optical w power, regulat+/adjust+, degradation/deteriorat+, service, bit, distance, SNR

**C. DOCUMENTS CONSIDERED TO BE RELEVANT**

| Category* | Citation of document, with indication, where appropriate, of the relevant passages | Relevant to claim No. |
|---|---|---|
| PX | CN102142903A (HUAWEI TECHNOLOGIES CO., LTD.) 03 Aug. 2011 (03.08.2011)<br>claims 1-12 | 1-12 |
| A | CN101656589A (HUAWEI TECHNOLOGIES CO., LTD.) 24 Feb. 2010 (24.02.2010) the whole document | 1-12 |
| A | CN101505190A (HUAWEI TECHNOLOGIES CO., LTD.) 12 Aug. 2009 (12.08.2009) the whole document | 1-12 |
| A | US7769302B1 (AT & T INTELLECTUAL PROPERTY II, L.P.) 03 Aug. 2010 (03.08.2010)<br>the whole document | 1-12 |

☐ Further documents are listed in the continuation of Box C.　　　☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 May 2012 (15.05.2012) | 31 May 2012 (31.05.2012) |

| Name and mailing address of the ISA | Authorized officer |
|---|---|
| State Intellectual Property Office of the P. R. China<br>No. 6, Xitucheng Road, Jimenqiao<br>Haidian District, Beijing 100088, China<br>Facsimile No. (86-10)62019451 | ZHANG, Yanqing<br><br>Telephone No. (86-10) 62411428 |

Form PCT/ISA /210 (second sheet) (July 2009)

## INTERNATIONAL SEARCH REPORT
Information on patent family members

International application No.

**PCT/CN2012/071428**

| Patent Documents referred in the Report | Publication Date | Patent Family | Publication Date |
|---|---|---|---|
| CN102142903A | 03.08.2011 | NONE | |
| CN101656589A | 24.02.2010 | NONE | |
| CN101505190A | 12.08.2009 | NONE | |
| US7769302B1 | 03.08.2010 | NONE | |

Form PCT/ISA /210 (patent family annex) (July 2009)

**EP 2 662 995 A1**

## REFERENCES CITED IN THE DESCRIPTION

### Patent documents cited in the description

- CN 201110077267